# EUROPEAN PATENT APPLICATION

(11) **EP 4 318 979 A1**
(43) Date of publication of application: **07.02.2024**
(21) Application number: 22774614.6
(22) Date of filing: 21.01.2022
(51) Int. Cl.: H04B 13/00, H04B 5/02

(54) **COMMUNICATION SYSTEM AND COMMUNICATION METHOD**

(30) Priority: 26.03.2021 JP 2021053231
(71) Applicant: Sony Group Corporation, Tokyo 108-0075 (JP)
(72) Inventor: IRIE, Motosuke, Tokyo 108-0075 (JP); HIRABAYASHI, Katsuki, Atsugi-shi, Kanagawa 243-0014 (JP); OOTA, Yoshinori, Atsugi-shi, Kanagawa 243-0014 (JP); OSHIMA, Koichi, Tokyo 108-0075 (JP); ISHIDA, Minoru, Atsugi-shi, Kanagawa 243-0014 (JP)
(74) Representative: 2SPL Patentanwälte PartG mbB
(86) International application number: PCT/JP2022/002085
(87) International publication number: WO 2022/201812

(57) **Abstract**

A communication system (100) includes: a plurality of stacked containers (2) having conductivity; and a plurality of electric field communication terminals (5) attached to the containers (2) in such a manner as to perform electric field coupling with any of the plurality of containers (2), in which the plurality of containers(2) includes a container (2) that contains a sensing terminal (4) that acquires sensing data, the plurality of electric field communication terminals (5) includes a first electric field communication terminal (5) attached to an inner side of the container (2) in which the sensing terminal (4) is contained, and a second electric field communication terminal (5) attached to an outer side of at least one container (2) of the plurality of containers (2), and the first electric field communication terminal (5) transmits the sensing data from the sensing terminal (4) to the second electric field communication terminal (5) via the plurality of containers (2).

## Description

### Field

The present disclosure relates to a communication system and a communication method.

### Background

For example, Patent Literature 1 discloses a communication device that radiates an electromagnetic wave to an external conductor and that is used as an antenna.

### Citation List

### Patent Literature

Patent Literature 1: JP 2010-34617 A

### Summary

### Technical Problem

When sensing data of a cargo or the like contained in a container is transmitted from an inner side of a container to an outer side of the container by an electromagnetic wave, there is a possibility that the electromagnetic wave is blocked by the container and the sensing data cannot be taken out of the container.

One aspect of the present disclosure enables sensing data to be taken out of a container.

### Solution to Problem

A communication system according to one aspect of the present disclosure includes: a plurality of stacked containers having conductivity; and a plurality of electric field communication terminals attached to the containers in such a manner as to perform electric field coupling with any of the plurality of containers, wherein the plurality of containers includes a container that contains a sensing terminal that acquires sensing data, the plurality of electric field communication terminals includes a first electric field communication terminal attached to an inner side of the container in which the sensing terminal is contained, and a second electric field communication terminal attached to an outer side of at least one container of the plurality of containers, and the first electric field communication terminal transmits the sensing data from the sensing terminal to the second electric field communication terminal via the plurality of containers.

A communication method according to one aspect of the present disclosure includes: transmitting, via a plurality of stacked containers having conductivity, sensing data from a sensing terminal to a second electric field communication terminal attached to an outer side of at least one container of the plurality of containers in such a manner as to perform electric field coupling with the container, the transmitting being performed by a first electric field communication terminal attached to an inner side of a container, which contains the sensing terminal that acquires the sensing data, among the plurality of containers in such a manner as to perform the electric field coupling with the container.

### Brief Description of Drawings

FIG. 1 is a view illustrating an example of a schematic configuration of a communication system according to a first embodiment.
FIG. 2 is a view illustrating an example of a schematic configuration of a sensing terminal.
FIG. 3 is a view illustrating an example of a schematic configuration of an electric field communication terminal.
FIG. 4 is a view illustrating an example of a schematic configuration of an electric field communication transceiver.
FIG. 5 is a view illustrating an example of a schematic configuration of a gateway device.
FIG. 6 is a view illustrating an example of a node type and communication.
FIG. 7 is a view illustrating an example of a node configuration of the communication system.
FIG. 8 is a view illustrating an example of the node configuration of the communication system.
FIG. 9 is a view illustrating an example of application of the communication system to a container ship.
FIG. 10 is a view illustrating an example of a schematic configuration of a communication system according to a second embodiment.
FIG. 11 is a view illustrating an example of a node type and communication.
FIG. 12 is a view illustrating an example of a node configuration of the communication system.
FIG. 13 is a view illustrating an example of the node configuration of the communication system.
FIG. 14 is a view illustrating an example of terminal information.
FIG. 15 is a flowchart illustrating an example of a use case of the communication system.
FIG. 16 is a flowchart illustrating an example of processing executed in the electric field communication terminal.
FIG. 17 is a flowchart illustrating an example of the processing executed in the electric field communication terminal.
FIG. 18 is a view illustrating an example of the node configuration of the communication system.
FIG. 19 is a view illustrating an example of the node configuration of the communication system.

### Description of Embodiments

In the following, embodiments of the present disclosure will be described in detail on the basis of the drawings. Note that in each of the following embodiments, overlapped description is omitted by assignment of the same reference sign to the same elements.

The present disclosure will be described in the following order of items.
1. First embodiment
2. Example of application to a container ship
3. Second embodiment
4. Example of a use case
5. Example of processing of an electric field communication terminal
6. Modification example

### 7. Example of effects

### 1. First embodiment

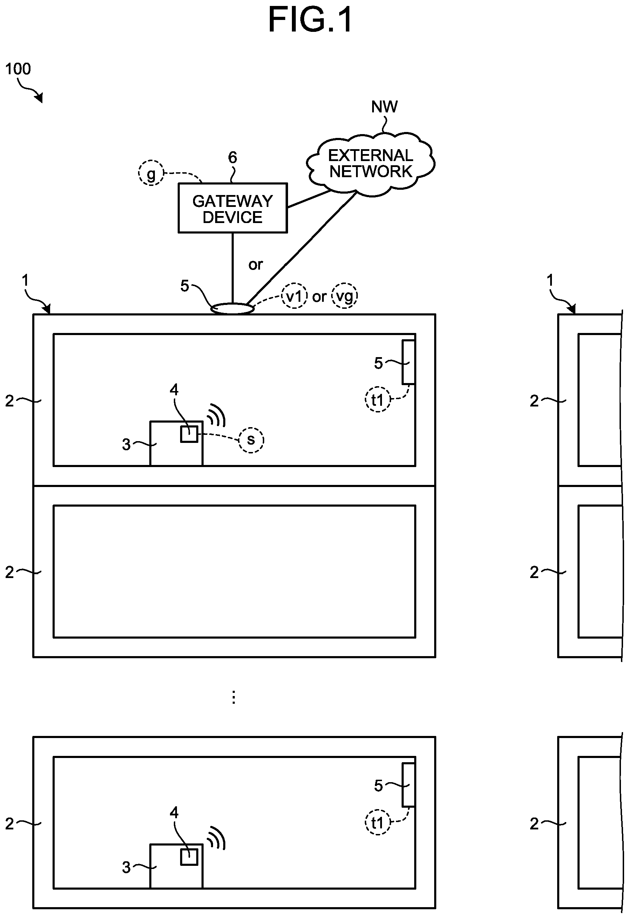

FIG. 1 is a view illustrating an example of a schematic configuration of a communication system according to the first embodiment. The communication system 100 includes one or more container stacks 1, a plurality of terminals 5, and a gateway device 6. Note that as described later, the terminals 5 may have a function of the gateway device 6. In that case, the communication system 100 may not include the gateway device 6. The communication system 100 can communicate with an external network NW. Sensing data of a cargo 3 (described later) is transmitted to the external network NW.

Each of the container stacks 1 includes a plurality of stacked containers 2. All of the plurality of containers 2 have conductivity. Examples of such containers 2 include a steel plate container and the like. When the adjacent containers 2 come into contact with each other in a height direction of the container stack 1 (stacking direction of the containers 2), the plurality of containers 2 is electrically connected (coupled). Note that a state in which two container stacks 1 are arranged at intervals is illustrated in FIG. 1. Hereinafter, unless otherwise specified, one container stack 1 illustrated on a left side of FIG. 1 will be described.

Among the plurality of containers 2, at least one container 2 contains a cargo 3 and a sensing terminal 4. A plurality of the cargos 3 and a plurality of the sensing terminals 4 may be contained in the same container 2. Some of the containers 2 may contain no cargo 3 and no sensing terminal 4. In the example illustrated in FIG. 1, a second container 2 from the top contains no cargo 3 and no sensing terminal 4.

The cargo 3 may be any cargo that can be, for example, transported and stored by the containers 2. Examples of the cargo includes a carton and the like.

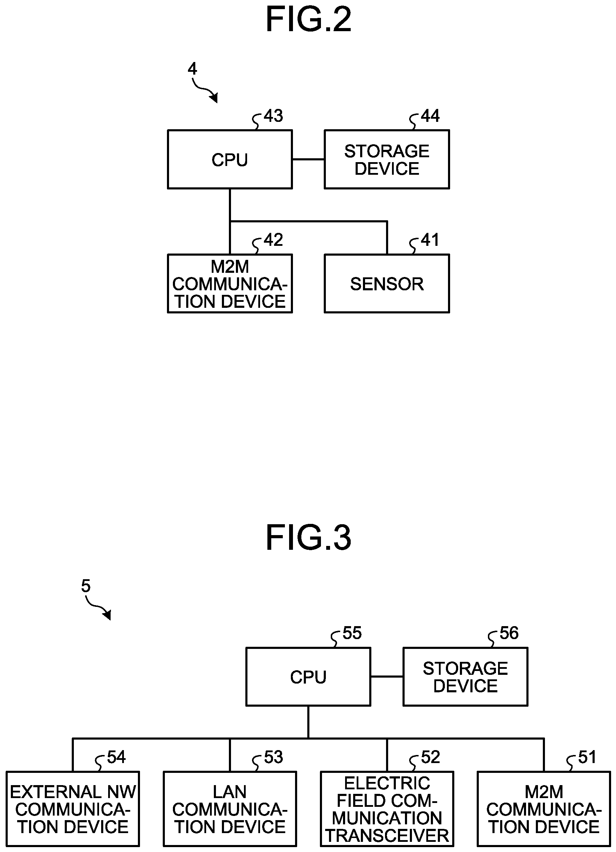

The sensing terminal 4 senses (detects) a state of the cargo 3 and acquires sensing data thereof. The sensing terminal 4 will be described with reference to FIG. 2.

FIG. 2 is a view illustrating an example of a schematic configuration of the sensing terminal. In this example, the sensing terminal 4 includes a sensor 41, an M2M communication device 42, a CPU 43, and a storage device 44.

The sensor 41 senses a state of the cargo 3 and outputs sensing data indicating a result of the sensing. Various kinds of information indicating the state of the cargo 3 may be included in the sensing data.

The M2M communication device 42 performs machine to machine (M2M) communication. Examples of the M2M communication include WiFi (registered trademark), Bluetooth (BL) (registered trademark), Bluetooth Low Energy (BLE) (registered trademark), and Zigbee (registered trademark). An example of a communication partner is the terminal 5 attached in the same container 2. Note that the M2M communication may be wired communication although being preferably wireless communication.

The CPU 43 is a central processing unit that performs overall control of the sensing terminal 4. For example, the CPU 43 controls the sensor 41 and acquires the sensing data of the cargo 3. The CPU 43 controls the M2M communication device 42 and transmits the sensing data to the terminal 5.

The storage device 44 stores information necessary for processing executed in the sensing terminal 4. The stored information may also include a program for causing the CPU 43 to execute desired processing.

Returning to FIG. 1, the plurality of terminals 5 takes the sensing data out of the container 2 and transmits the sensing data to the external network NW. Each of the plurality of terminals 5 is an electric field communication terminal attached to any one of the plurality of containers 2 in such a manner as to perform electric field coupling with the container 2. The terminal 5 will be described with reference to FIG. 3.

FIG. 3 is a view illustrating an example of a schematic configuration of the electric field communication terminal. In this example, the terminal 5 includes an M2M communication device 51, an electric field communication transceiver 52, a LAN communication device 53, an external NW communication device 54, a CPU 55, and a storage device 56.

The M2M communication device 51 performs the M2M communication. An example of a communication partner is the sensing terminal 4. The terminal 5 and the sensing terminal 4 detect each other by pairing, for example. As a result, the sensing terminal 4 used in the communication system 100 can be identified, and a connection between the sensing terminal 4 and the terminal 5 can be established. Various known pairing methods may be used for the pairing.

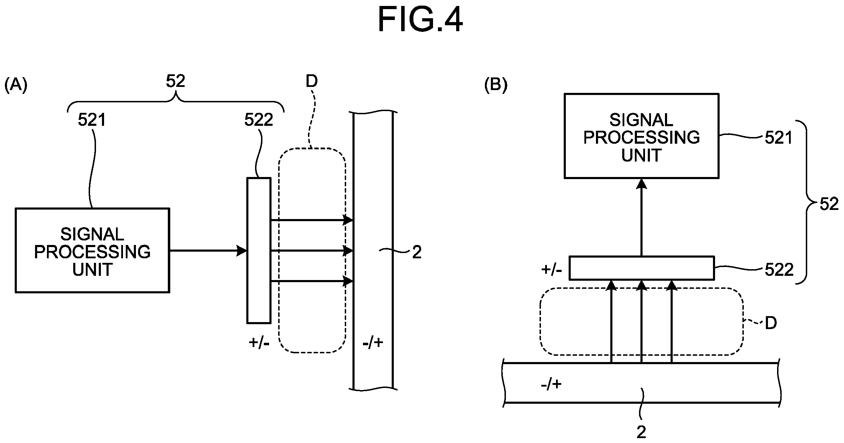

The electric field communication transceiver 52 performs electric field communication by using the electric field coupling with the container 2. For the electric field communication, any communication method using an electric signal may be used. An example of a communication partner is another terminal 5. In the configuration of the electric field communication transceiver 52, a part specifically related to the electric field communication will be described with reference to FIG. 4.

FIG. 4 is a view illustrating an example of a schematic configuration of the electric field communication transceiver. Examples of components related to the electric field communication include a signal processing unit 521 and an antenna 522.

The signal processing unit 521 processes transmission and reception signals of the antenna 522. For example, the signal processing unit 521 generates a signal and supplies the signal to the antenna 522. Furthermore, the signal processing unit 521 processes a signal from the antenna 522.

The antenna 522 is provided in such a manner as to face the container 2. For example, the antenna 522 is provided apart from the container 2 in such a manner as to face a part of a steel plate of the container 2. The antenna 522 may have a plate shape extending in such a manner as to face a surface of the container 2. A dielectric D is provided or present between the antenna 522 and the container 2. The dielectric D may be plastic or the like, or may be air or the like. In a case where the dielectric D is the air, the dielectric D may be a void. As described next, the antenna 522 generates dielectric polarization in the dielectric D.

Arrows in (A) of FIG. 4 schematically indicate signal transmission. The signal generated by the signal processing unit 521 is supplied to the antenna 522. An electric field is generated in the dielectric D, and polarization (dielectric polarization) is generated. In the container 2, a charge having a polarity opposite to that of the antenna 522 is generated. The charges are schematically illustrated as +/- and -/+. Since the polarization changes according to the signal, the charge generated in the container 2 also changes according to the signal. By such electric field coupling, the signal from the antenna 522 is transmitted to the container 2, and a signal (electric field signal) is generated in the container 2.

Arrows in (B) of FIG. 4 schematically indicate signal reception. In a reverse flow of the above, the signal of the container 2 is transmitted to the antenna 522 and received by the antenna 522. The signal processing unit 521 processes the signal from the antenna 522.

By the electric field communication using the electric field coupling in the above-described manner, a communication network via the container stack 1 can be constructed between the plurality of terminals 5. Such a communication network is referred to as an "electric field communication network". In an embodiment, each of the terminals 5 establishes a connection with another terminal 5 via the container stack 1, whereby the plurality of terminals 5 constructs the electric field communication network. For example, the plurality of terminals 5 constructs the electric field communication network by detecting each other by pairing. In the electric field communication between the pairs, a low-intensity signal that controls a flow of the signal to the container 2 outside a path between the pairs may be used.

Returning to FIG. 3, the LAN communication device 53 performs local area network (LAN) communication. An example of a communication partner is the gateway device 6. The LAN communication may be wireless communication or wired communication. Examples of the LAN communication include Wi-Fi (registered trademark) communication, Ethernet (registered trademark) communication, and long term evolution (LTE) communication.

The external NW communication device 54 communicates with the external network NW. Communication with the external network NW may be referred to as "external network communication". Examples of the external network communication include long term evolution (LTE) communication, low power wide area-network (LPWAN) communication, satellite communication, and the like. The external NW communication device 54 provides a communication interface with the external network NW. Data can be transmitted to the external network NW through the gateway.

The CPU 55 performs overall control of the terminal 5. For example, the CPU 55 controls the M2M communication device 51 and receives the sensing data from the sensing terminal 4. The CPU 55 controls the electric field communication transceiver 52, and transmits and receives various kinds of information to and from another terminal 5. The CPU 55 controls the LAN communication device 53 and transmits and receives various kinds of information to and from the gateway device 6. The CPU 55 controls the external NW communication device 54 and transmits the sensing data to the external network NW.

The storage device 56 stores information necessary for processing executed in the terminal 5. The stored information may also include a program for causing the CPU 55 to execute desired processing.

Returning to FIG. 1, the plurality of terminals 5 includes a terminal 5 attached to an inner side of the container 2 in which the cargo 3 and the sensing terminal 4 are contained (first electric field communication terminal). In the example illustrated in FIG. 1, the terminal 5 is attached to the inner side of each of the container 2 located at the uppermost position and the container 2 located at the lowermost position. The terminal 5 is not attached to the inner side of the second container 2 from the top.

The plurality of terminals 5 includes a terminal 5 attached to an outer side of at least one container 2 of the plurality of containers 2 (second electric field communication terminal). In the example illustrated in FIG 1, one terminal 5 is attached to an outer side of an upper portion of the uppermost container 2. However, the position of the terminal 5 attached to the outer side of the container stack 1 is not limited to the example illustrated in FIG. 1. For example, the terminal 5 may be attached to an outer side of a side portion of the container 2.

Hereinafter, the terminal 5 attached to the inner side of the containers 2 may be simply referred to as a "terminal 5 inside the container 2". The terminal 5 attached to the outer side of the container 2 may be simply referred to as a "terminal 5 outside the container 2".

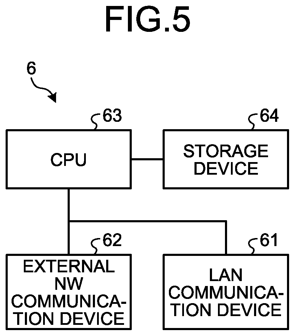

The gateway device 6 communicates with the external network NW. The gateway device 6 will be described with reference to FIG. 5.

FIG. 5 is a view illustrating an example of a schematic configuration of the gateway device. In this example, the gateway device 6 includes a LAN communication device 61, an external NW communication device 62, a CPU 63, and a storage device 64. Since the LAN communication device 61 and the external NW communication device 62 are similar to the LAN communication device 53 and the external NW communication device 54 described above with reference to FIG. 3, the description thereof will not be repeated.

The CPU 63 performs overall control of the gateway device 6. For example, the CPU 63 controls the LAN communication device 61 and transmits and receives various kinds of information to and from the terminals 5. The CPU 63 controls the external NW communication device 62 and transmits and receives various kinds of information to and from the external network NW.

The storage device 64 stores information necessary for processing executed in the gateway device 6. The stored information may also include a program for causing the CPU 63 to execute desired processing.

Returning to FIG. 1, in the communication system 100, in each of the containers 2, the sensing terminal 4 acquires sensing data of the cargo 3 in the container 2. The sensing terminal 4 transmits the sensing data to the terminal 5 inside the same container 2 by the M2M communication. The terminal 5 inside the container 2 receives the sensing data from the sensing terminal 4, and transmits the sensing data to the terminal 5 outside the container stack 1 by the electric field communication. The terminal 5 outside the container stack 1 receives the sensing data from the terminal 5 inside the container 2. In such a manner, the sensing data of the cargo 3 contained in the container 2 can be taken out of the container 2. By using the electric field communication, communication between the inside of the container 2 and the outside of the container 2 can be made wireless. For example, it is not necessary to connect the inside and the outside of the container 2 having conductivity by wire (for example, by processing of a wall). The device configuration is simplified, and the terminal 5 can be easily installed (attached to the container 2, for example).

Furthermore, the terminal 5 outside the container stack 1 directly or indirectly transmits the sensing data to the external network NW. For example, the terminal 5 (directly) transmits the sensing data to the external network NW by using the external NW communication device 54 included in the terminal 5. Alternatively, the terminal 5 transmits the sensing data to the gateway device 6 by using the LAN communication device 53 included in the terminal 5. The gateway device 6 transmits the sensing data from the terminal 5 to the external network NW. As a result, the sensing data from the terminal 5 is transmitted (indirectly) to the external network NW via the gateway device 6. The terminal 5 in this case can be also referred to as a network bridge terminal that relays communication to the external network NW. Since the sensing data is transmitted to the external network NW, the sensing data can be collected via the external network NW. By using the electric field communication, the sensing data can be more securely transmitted to the terminal 5 outside the container 2, which terminal is capable of performing the external network communication, as compared with a case where wireless communication outside the container 2 is used, for example. This is because although there is a problem that the wireless communication (electromagnetic wave) outside the container 2 is blocked by an adjacent container stack 1 or the like, there is no such problem in the electric field communication using the container stack 1. According to the communication system 100, not only taking the sensing data of the cargo 3 out of the container 2, but also securely transmitting the sensing data to the terminal 5 installed in a place connectable to the external network NW become possible.

Hereinafter, unless otherwise specified, directly or indirectly transmitting the sensing data to the external network NW may be simply referred to as "transmission to the external network NW".

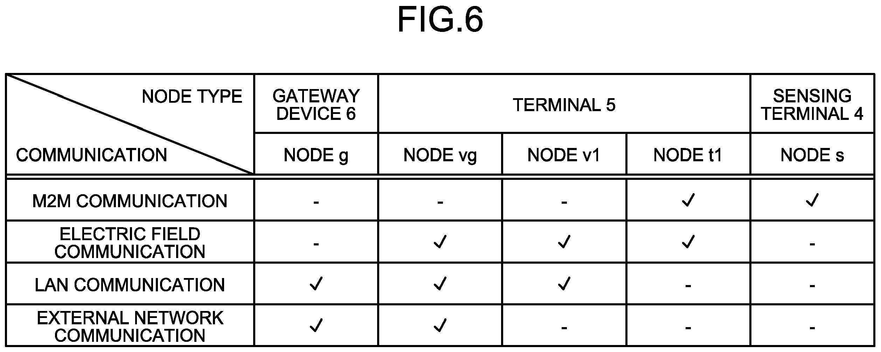

The sensing terminal 4, the terminal 5, and the gateway device 6 described above can also be described in association with nodes constituting the communication system 100. Those nodes are also illustrated in FIG. 1 described above. Specifically, the sensing terminal 4 functions as a node s. The terminal 5 functions as a node vg, a node v1, or a node t1. The gateway device 6 functions as a node g. A node configuration of the communication system 100 will be described with reference to FIG. 6 to FIG. 8.

FIG. 6 is a view illustrating an example of a node type and communication. The node g corresponds to the function of the gateway device 6. Communication of the node g includes LAN communication and the external network communication that are provided by the LAN communication device 61 and the external NW communication device 62 of the gateway device 6 (FIG. 5).

The node vg, the node v1, and the node t1 correspond to the functions of the terminals 5. Communication of the node vg, the node v1, and the node t1 includes at least the electric field communication. The electric field communication is performed by the electric field communication transceiver 52 of each of the terminals 5.

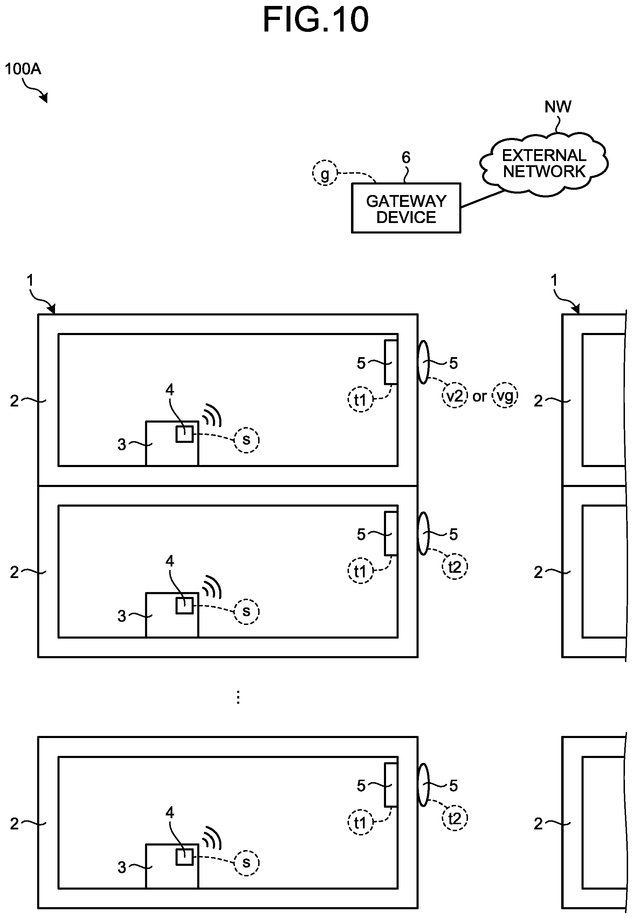

Each of the node vg and the node v1 corresponds to the function of the terminal 5 outside the container stack 1. The node vg corresponds to the function of the terminal 5 that directly transmits the sensing data to the external network NW. Communication of the node vg includes the LAN communication and the external network communication in addition to the electric field communication. The LAN communication and the external network communication are performed by the LAN communication device 53 and the external NW communication device 54 of the terminal 5 (FIG. 3). Note that since the communication of the node vg includes the LAN communication, for example, in a communication system 100A (described later) (FIG. 10), in a case where the node vg moves to a position, in which it is difficult to communicate with the external network NW, together with the container 2, a use of relaying the sensing data to another node vg becomes also possible. The node v1 corresponds to the function of the terminal 5 that indirectly transmits the sensing data to the external network NW (via the gateway device 6). Communication of the node v1 includes the LAN communication in addition to the electric field communication.

The node t1 corresponds to the function of the terminal 5 inside the container 2. Communication of the node t1 includes the M2M communication in addition to the electric field communication. The M2M communication is performed by the M2M communication device 51 of the terminal 5 (FIG. 3).

The node s corresponds to the function of the sensing terminal 4. Communication of the node s includes the M2M communication. The M2M communication is provided by the M2M communication device 42 of the sensing terminal 4 (FIG. 2).

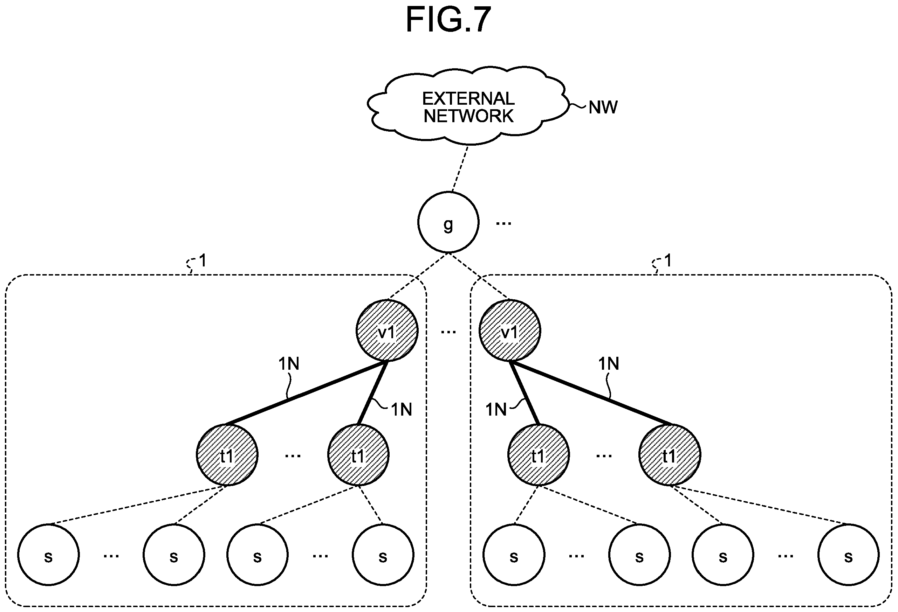

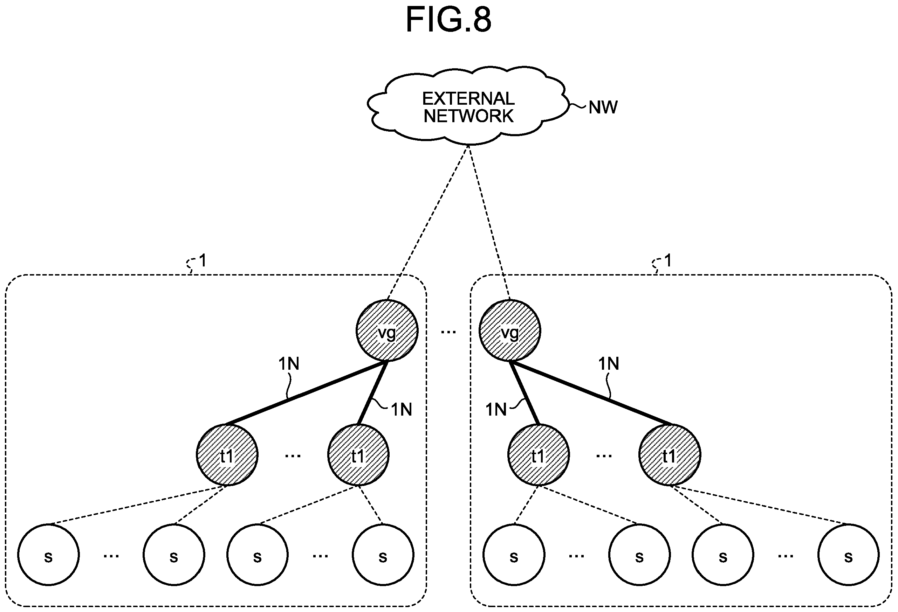

FIG. 7 and FIG. 8 are views illustrating examples of the node configuration of the communication system. The electric field communication network is referred to and illustrated as an electric field communication network 1N.

In the example illustrated in FIG. 7, the node g is present between the external network NW and the plurality of container stacks 1. In each of the plurality of container stacks 1, there are the node v1, the node t1, and the node s. The node v1 is the highest node (on a side of the node g), and the node s is the lowest node. The node t1 is a node between the node v1 and the node s.

The node s transmits the sensing data to the node t1. The node t1 transmits the sensing data from the node s to the node v1. The node v1 transmits the sensing data from the node t1 to the external network NW indirectly (via the node g).

In the example illustrated in FIG. 8, the node vg is present instead of the node v1 (FIG. 7). The node vg directly transmits the sensing data from the node t1 to the external network NW.

In the communications system 100, the node configuration may change dynamically. For example, due to unloading of the containers 2, some containers 2 of the plurality of containers 2 included in the container stack 1 by the time are no longer included in the container stack 1. A node (such as the node t1) corresponding to the terminal 5 attached to the container 2 is removed from the node configuration. A node (node s) corresponding to the sensing terminal 4 contained in the container 2 is also removed from the node configuration. The same applies to a case where the cargo 3 and the sensing terminal 4 contained in the some of the containers 2 are taken out of the container 2.

Due to the change in the node configuration as described above, the connection between the plurality of terminals 5 established by the time also changes. For example, connection of some terminals 5 of the plurality of terminals 5 is no longer established. The plurality of terminals 5 reconstructs the electric field communication network 1N (dynamically constructs the electric field communication network 1N) according to the change in the connection. For example, when the terminal 5 (such as the node t1) connection with which is no longer established and which is separated from the electric field communication network 1N is detected, the remaining terminals 5 newly construct the electric field communication network 1N not including the separated terminal 5.

The electric field communication network 1N is reconstructed according to the change in the node configuration, whereby the function of the communication system 100 is maintained. For example, even in a case where the number or an installation state of the sensing terminals 4 and the terminals 5 changes, the sensing data of the cargo 3 contained in each of the containers 2 can still be taken out of the container 2 and can be kept transmitted to the external network NW.

### 2. Example of application to a container ship

An application example of the communication system 100 will be described. For example, the communication system 100 is applied to a transportation facility such as a container ship that transports the containers 2, a port, a warehouse that stores the containers 2, and the like.

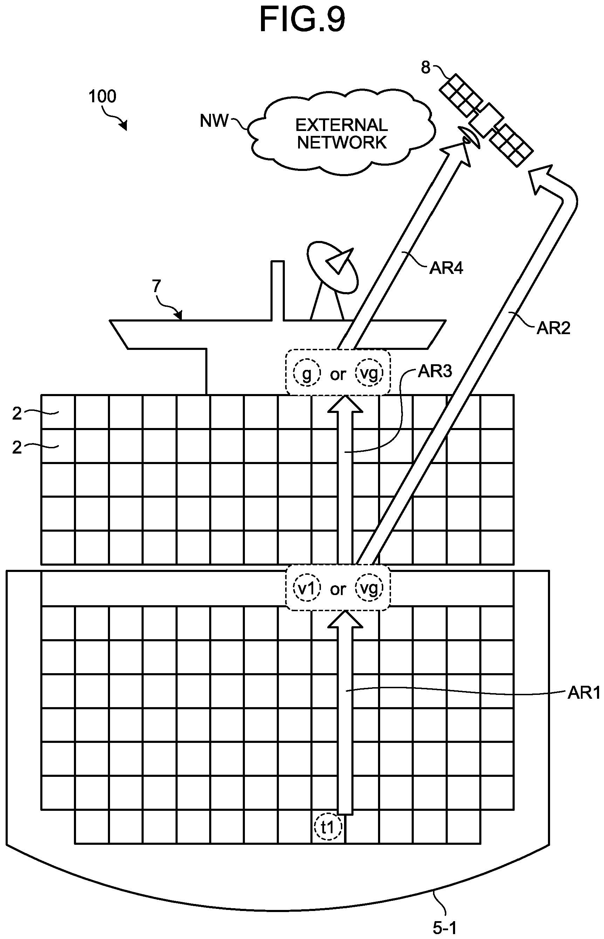

FIG. 9 is a view illustrating an example of application of the communication system to a container ship. The container ship is referred to and illustrated as a container ship 7. Communication with the external network NW is satellite communication using an artificial satellite 8. The plurality of containers 2 is stacked separately on an upper side and a lower side of a deck of the container ship 7. On each of the upper side and the lower side of the deck, an electric field communication network can be constructed for each container stack. Note that in FIG. 9, each of the terminals 5 is illustrated as the node t1, the node v1, or the node vg. Hereinafter, an example in which sensing data from the container 2 located at the lowermost position on the lower side of the deck is taken out of the container 2 and transmitted to the external network NW will be described.

As indicated by an arrow AR1, the node t1 transmits the sensing data to the node v1 or the node vg (near the deck) above the node t1 by the electric field communication via the electric field communication network on the lower side.

In a case where the node vg near the deck receives the sensing data, the node vg transmits the sensing data to the external network NW as indicated by an arrow AR2.

In a case where the node v1 near the deck receives the sensing data, as indicated by an arrow AR3, the node v1 transmits the sensing data to the node g or the node vg provided in an upper portion of the container ship 7. For example, the node v1 transmits the sensing data to the node g or the node vg by using the LAN communication. The sensing data is then transmitted to the external network NW. Alternatively, the sensing data may be transmitted to the node vg via the upper electric field communication network. For example, by the LAN communication, the node v1 transmits the sensing data to another node v1 (not illustrated) also provided near the deck and connected to the upper electric field communication network. Another node v1 transmits the sensing data from the node v1 to the node vg provided on the upper portion of the container ship 7 via the upper electric field communication network. The sensing data is then transmitted to the external network NW.

For example, as described above, the communication system 100 takes out the sensing data of the cargo 3 contained in the container 2 mounted on the container ship 7, and transmits the sensing data to the external network NW. Without laying of a cable or the like, the sensing data can be relayed to the uppermost layer where a radio wave can be transmitted to the artificial satellite 8, for example.

### 3. Second embodiment

An example in which one terminal 5 is attached to the outer side of the container 2 has been described above. On the other hand, a plurality of terminals 5 may be attached an outer side of a container 2. Description of this will be made with reference to FIG. 10 to FIG. 13.

FIG. 10 is a view illustrating an example of a schematic configuration of a communication system according to the second embodiment. Hereinafter, unless otherwise specified, one container stack 1 illustrated on a left side of FIG. 10 will be described. In this example, each of the illustrated containers 2 contains a cargo 3 and a sensing terminal 4, and a terminal 5 (node t1) is provided inside. However, similarly to the communication system 100 described above (FIG. 1), there may be a container 2 in which no cargo 3 and no sensing terminal 4 are contained or no terminal 5 is attached to an inner side.

In a communication system 100A illustrated as an example, a plurality of the terminals 5 includes a plurality of terminals 5 attached to an outer side of the containers 2 (second electric field communication terminals). Each of nodes corresponding to functions of the terminals 5 outside the containers 2 is referred to and illustrated as a node vg, a node v2, or a node t2. In this example, the terminals 5 are respectively attached to the outer side of the plurality of containers 2. Furthermore, in this example, each of the terminals 5 outside the containers 2 is attached on an opposite side of a terminal 5 inside the container 2 (node t1) with the container 2 being interposed therebetween. The plurality of terminals 5 outside the containers 2 is located at different positions in a height direction of the container stack 1. However, the number and positions of the plurality of terminals 5 provided outside the container stack 1 are not limited to the example illustrated in FIG. 10.

Each of the plurality of terminals 5 outside the containers 2 may be able to transmit sensing data from the terminal 5 inside the container 2 to an external network NW. Any one of the plurality of terminals 5 outside the containers 2 in the communication system 100A may aggregate (collect) the sensing data and transmit the sensing data to the external network NW. As a result, for example, transmission of the sensing data to the external network NW is made efficient.

Hereinafter, the terminal 5 that transmits the sensing data to the external network NW is also referred to as a "master device". The other terminal 5 is also referred to as a "slave device". A node corresponding to the function of the master device is the node vg or the node v2. A node corresponding to the function of the slave device is the node t2 or the node t1.

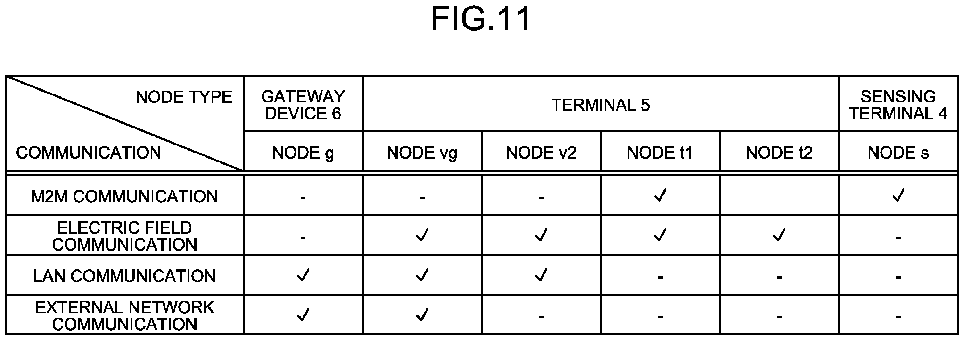

FIG. 11 is a view illustrating an example of a node type and communication. Compared with FIG. 6 described above, the node v2 is present instead of the node v1. In addition, the node t2 is further present.

The node v2 and the node t2 correspond to the functions of the terminals 5 outside the container stack 1. Communication of the node v2 includes LAN communication in addition to electric field communication. The node t2 includes electric field communication.

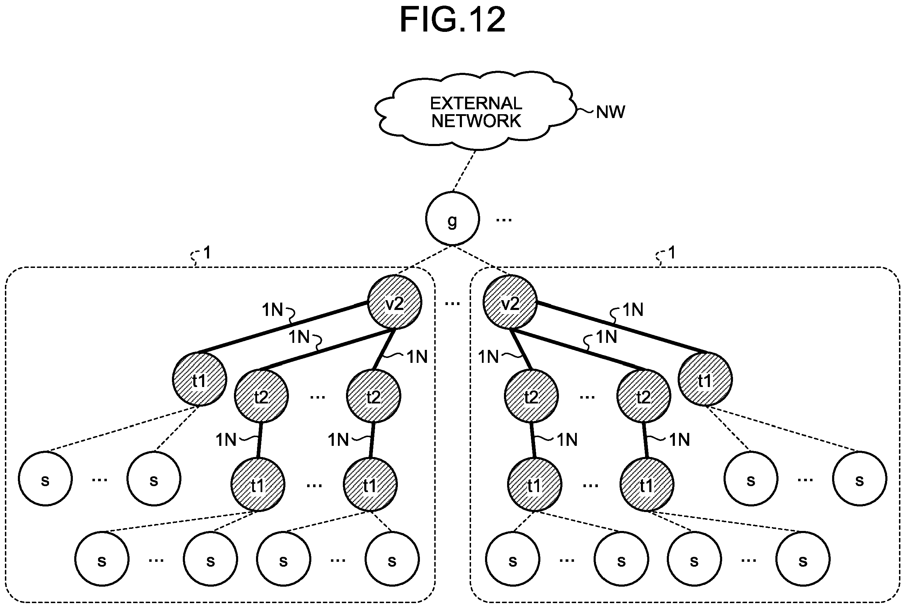

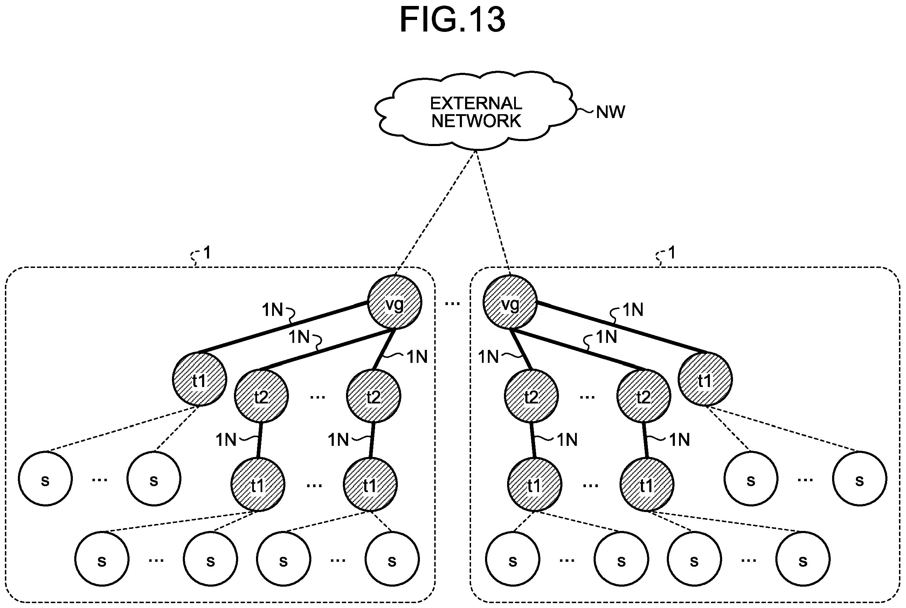

FIG. 12 and FIG. 13 are views illustrating examples of a node configuration of the communication system. In the example illustrated in FIG. 12, a node g is present between the external network NW and the plurality of container stacks 1. In each of the plurality of container stacks 1, there are the node v2, the node t2, the node t1, and a node s. The node v2 is the highest node (on a side of the node g), and the node s is the lowest node. The node t1 and the node t2 are nodes between the node v2 and the node s. The node t1 is a node higher than the node t2 (on a side of the node v2). The node t2 is a node lower than the node t1 (on a side of the node s).

The node s transmits sensing data to the node t1. The node t1 transmits the sensing data from the node s to the node t2 or the node v2. The node t2 transmits sensing data from the node t1 to the node v2. The node v2 transmits the sensing data from the node t1 or the node t2 to the external network NW indirectly (via the node g).

In the example illustrated in FIG. 13, a node vg is present instead of the node v2 (FIG. 12). The node vg directly transmits the sensing data from the node t1 or the node t2 to the external network NW.

Also in the communication system 100A, the plurality of terminals 5 reconstructs an electric field communication network 1N (dynamically constructs the electric field communication network 1N) according to a change in connection between the terminals. For example, when the terminal 5 (such as the node vg, the node v2, the node t1, or the node t2) connection with which is no longer established and which is separated from the electric field communication network 1N is detected, the remaining terminals 5 newly construct the electric field communication network 1N not including the separated terminal 5.

In the communication system 100A, the reconstruction of the electric field communication network 1N may include a change of the master device. For example, even in a case where the master device is separated from the electric field communication network 1N for some reason such as unloading of the container 2, or a failure, a removal, or a movement of the master device, a new master device is determined, and the master device transmits the sensing data to the external network NW. By dynamically changing the master device in such a manner, transmission of the sensing data to the external network NW can be maintained.

The plurality of terminals 5 determines one terminal 5 among the plurality of terminals 5 as the master device (the node vg or the node v2) and determines the other terminal 5 as the slave device (the node t1 or the node t2). The master device transmits, to the external network NW, the sensing data received by the slave device from the sensing terminal 4.

In one embodiment, the plurality of terminals 5 determines the master device on the basis of communication reliability from each of the terminals 5 to the external network NW. The communication reliability is calculated on the basis of an evaluation of a communication status, for example.

Some examples of the communication status will be described. For example, the communication status may include presence or absence of wired connection in LAN communication or external network communication. The communication status may be evaluated (added point evaluation) in such a manner that the communication reliability becomes higher as the number pieces of the wired connection is increased. The communication status may include received signal strength indication (RSSI) strength in communication. The communication status may be evaluated in such a manner that the communication reliability becomes higher as the RSSI strength becomes higher. The communication status may include presence or absence of gateway access. The gateway access is an access to a communication interface with the external network NW, and is given by, for example, a gateway device 6, an external NW communication device 54, or the like. In a case where there is the gateway access, the communication status may be evaluated in such a manner that the communication reliability becomes higher than that of a case where there is not the gateway access. In addition to the above, various kinds of communication status that can be used for evaluation of the communication reliability may be adopted.

The plurality of terminals 5 may determine the terminal 5 having the highest communication reliability as the master device and determine the other terminal 5 as the slave device. For example, it may be determined that the terminal 5 that is connected in a wired manner or has the higher RSSI strength than the other terminal 5, and that can access gateway access is set as the master device. By determining the terminal 5 having the highest communication reliability as the master device, it is possible to improve reliability of transmission of the sensing data to the external network NW.

The communication reliability can vary among the plurality of terminals 5. Since not being able to perform the external network communication or the LAN communication and being evaluated to have low communication reliability, the terminal 5 inside the container 2 is not determined as the master device. Since the communication reliability of each of the plurality of terminals 5 outside the containers 2 is evaluated to some extent depending on the communication status of the external network communication or the LAN communication, there is a possibility that the terminal 5 is determined to be the master device. The communication reliability may also vary among the plurality of terminals 5 outside the containers 2.

For example, as illustrated in FIG. 11, the plurality of terminals 5 outside the containers 2 is located at different positions in a height direction of the container stack 1, that is, in a stacking direction of the plurality of containers 2, an adjacent container stack 1 being present near them. The lower terminal 5 is greatly affected by the adjacent container stack 1, and the communication status may be deteriorated. For example, the lower terminal 5 has the smaller RSSI strength. The upper terminal 5 is less likely to be affected by the adjacent container stack 1, and deterioration in the communication status can be controlled as compared with the lower terminal 5. For example, the upper terminal 5 can acquire the higher RSSI strength than the lower terminal 5. Thus, there is an advantage of (dynamically) determining the master device on the basis of the communication reliability.

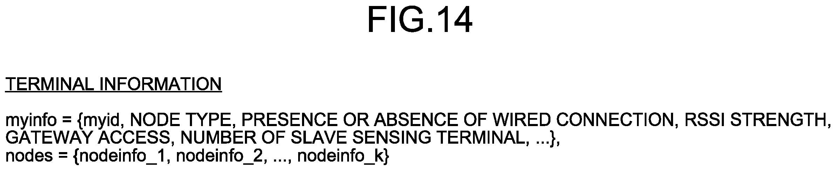

In order to determine the master device on the basis of the communication status as described above, each of the plurality of terminals 5 generates terminal information including the communication status and transmits (sends) the terminal information to the electric field communication network 1N. The plurality of terminals 5 shares the terminal information and determines the master device on the basis of communication reliability uniquely calculated therefrom. The terminal information will be described with reference to FIG. 14.

FIG. 14 is a view illustrating an example of the terminal information. The terminal information includes "myinfo" and "nodes". The "myinfo" is information of the terminal 5 (own terminal information). The "nodes" are information of the other terminals 5 (other terminal information).

Examples of the "myinfo" include "myid", a "node type", "presence or absence of wired connection", "RSSI strength", "gateway access", and the "number of small sensing terminals". The "myid" is information for uniquely specifying the terminal 5 (terminal ID). The "node type" indicates a type of a node of the terminal 5, more specifically, whether the terminal 5 is a master device or a slave device. The "presence or absence of wired connection", the "RSSI strength", and the "gateway access" are examples of the communication status for evaluating the communication reliability described above. The "number of small sensing terminals" indicates the number of sensing terminals 4 connected to the terminal 5.

The "nodes" include one or more pieces of "nodeinfo". The "nodeinfo" is myinfo of the other terminals 5, and is schematically illustrated as "nodeinfo_1", "nodeinfo_2", "nodeinfo_k", and the like in this example.

Note that the nodes in the terminal information are generated on the basis of the myinfo and the nodes included in the previously received terminal information from the other terminals 5.

For example, each of the plurality of terminals 5 performs broadcast transmission of the terminal information to all the other terminals 5. As a result, each of the plurality of terminals 5 receives the terminal information from the other terminals 5 connection with which is established. Each of the plurality of terminals 5 incorporates (merges) the received terminal information from the other terminals 5 into the "nodeinfo" of the terminal information generated by the own terminal while omitting duplication. Since the terminal information is shared between the plurality of terminals 5, for example, the master device can be determined in the above-described manner.

In one embodiment, a slave device may relay sensing data from another slave device to the master device. Even in a case where there is a slave device that cannot directly perform the electric field communication with the master device (connection with which is not established and which is outside a communication range), sensing data from the slave device can be transmitted to the master device.

For example, in a case where the nodes included in the terminal information from the slave device include the nodeinfo of the slave device connection of which to the master device is not established, the master device determines that there is the slave device outside the communication range. The master device requests the slave device connection with which is established to transmit (relay), to the master device, sensing data from the other slave device. The slave device, which is requested to perform relaying, transmits the sensing data from the other slave device connection of which to the own device is established (including the slave device outside the communication range from the master device) to the master device.

In a case where there is a plurality of the slave devices that can be requested to perform the relaying described above, the master device may select the slave device that is requested to perform the relaying in such a manner that a communication load according to the relay is distributed between the plurality of slave devices. In the distribution of the communication load, a communication status (reliability or the like) of the electric field communication between the slave devices may be considered. For example, the communication load may be distributed in such a manner that the communication load becomes smaller in the slave device with the worse communication status of the electric field communication.

### 4. Example of a use case

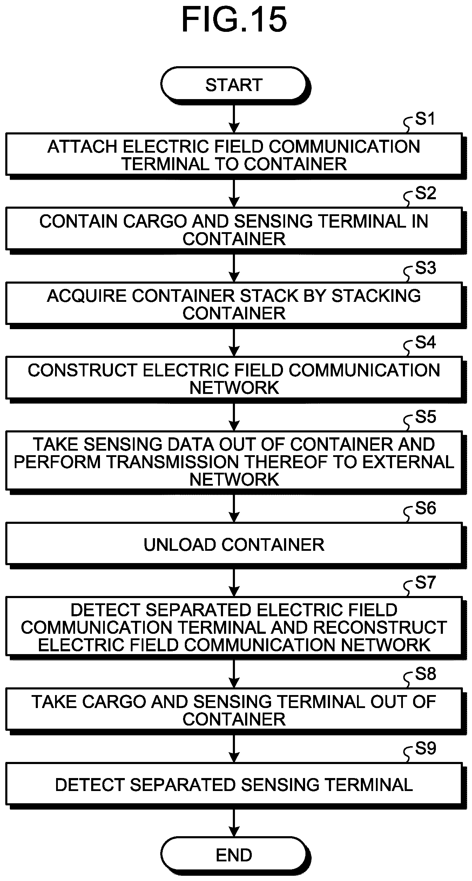

FIG. 15 is a flowchart illustrating an example of a use case of the communication system. Description of contents overlapping with the contents described above will be omitted as appropriate.

In Step S1, an electric field communication terminal is attached to a container. Each of the plurality of terminals 5 is attached to the inner side or the outer side of the container 2.

In Step S2, a cargo and a sensing terminal are contained in the container. The cargo 3 and the sensing terminal 4 are contained in an arbitrary container 2.

In Step S3, containers are stacked and a container stack is acquired. A plurality of the containers 2 is stacked and the one or more container stacks 1 are acquired.

In Step S4, an electric field communication network is constructed. The plurality of terminals 5 provided in the container stacks 1 performs, for example, pairing and establishes connection with each other by the electric field communication. The electric field communication network 1N including the container stacks 1 and the plurality of terminals 5 is constructed. Connection between the sensing terminal 4 and the terminal 5 inside each of the containers 2 is also established.

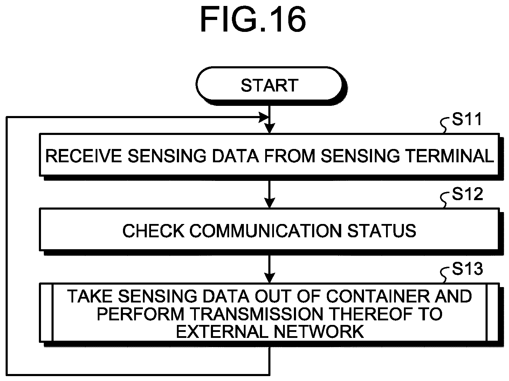

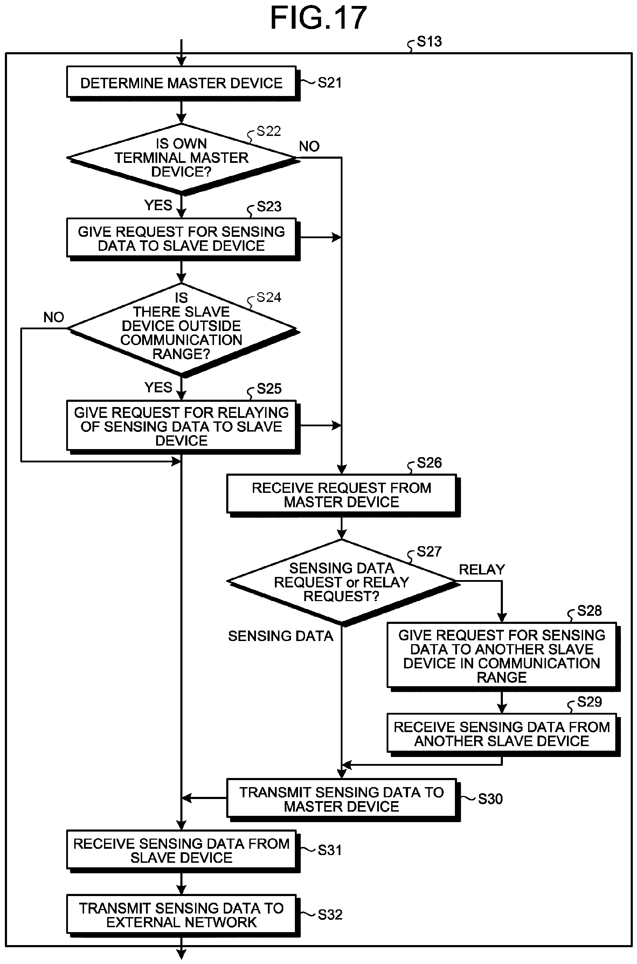

In Step S5, sensing data is taken out of the containers 2 and is transmitted to the external network. The details are as described above, and will be described again later with reference to FIG. 16 and FIG. 17.

In Step S6, the containers are unloaded. For example, some containers 2 in the plurality of containers 2 included in the container stacks 1 are unloaded.

In Step S7, the separated electric field communication terminal is detected, and the electric field communication network is reconstructed. Connection between the terminals 5 attached to the containers 2 unloaded in Step S6 described above and the terminals 5 attached to the containers 2 that are not unloaded (that are remaining) is no longer established. It is detected that the terminals 5 attached to the unloaded containers 2 are separated from the electric field communication network 1N. In response to a change in the connection, the electric field communication network 1N is reconstructed. Specifically, the remaining plurality of terminals 5 excluding the separated terminals 5 newly constructs the electric field communication network 1N not including the separated terminals 5.

In Step S8, the cargo and the sensing terminal are taken out of the container. For example, the cargo 3 and the sensing terminal 4 contained in some containers 2 in the plurality of containers 2 included in the container stacks 1 are taken out of the containers 2.

In Step S9, the separated sensing terminal is detected. It is detected that the connection between the sensing terminal 4 taken out of the container 2 in Step S8 and the corresponding terminal 5 disappears, and the extracted sensing terminal 4 is separated.

Note that Step S6 and Step S8 in the above are not limited to the illustrated order, and may be generated at any timing. In addition, although not illustrated, there may be a step of adding a container. In that case, new connection is established by a terminal 5 attached to the added container 2, and the electric field communication network 1N is reconstructed according to a change in the connection.

### 5. Example of processing of an electric field communication terminal

FIG. 16 and FIG. 17 are flowcharts illustrating an example of processing (communication method) executed in the electric field communication terminal. The processing of these flowcharts is repeatedly executed at a predetermined timing. The predetermined timing may be a periodic timing or an irregular timing. Note that the processing of each step is executed in the terminal 5 for which the processing (function) is required.

In Step S11, sensing data from the sensing terminal is received. For example, the sensing terminal 4 (node s) contained in the container 2 periodically acquires sensing data of the cargo 3, and transmits the sensing data to the terminal 5 (node t1) inside the same container 2 by M2M communication. The terminal 5 receives the sensing data from the sensing terminal 4.

In Step S12, the communication status is checked. For example, in the communication system 100A (FIG. 11), the terminal 5 (the node vg or the node v2) outside the container stack 1 checks the communication status (presence or absence of wired connection, RSSI strength, gateway access, and the like) and generates terminal information including the communication status.

In Step S13, the sensing data is taken out of the container and is transmitted to the external network. The terminal 5 inside the container 2 transmits the sensing data from the sensing terminal 4 to the terminal 5 outside the container 2. The sensing data is transmitted to the external network NW. For example, in a case of the communication system 100 (FIG. 1), the terminal 5 (the node v1 or the node vg) outside the container 2 transmits the sensing data to the external network NW. In a case of the communication system 100A (FIG. 11), the master device (the node vg or the node v2) among the plurality of terminals 5 (the node vg, the node v2, or the node t2) outside the containers 2 transmits the sensing data to the external network NW.

Details of the processing in Step S13 (FIG. 16) in a case where the master device is dynamically determined in the communication system 100A (FIG. 11) are illustrated as an example in FIG. 17.

In Step S21, the master device is determined. Each of the plurality of terminals 5 transmits (sends) terminal information and shares the terminal information. As described above, the master device is determined on the basis of the terminal information. The terminal 5 that has been the master device is continuously determined as the master device, or the terminal 5 that has been the slave device is determined as the master device (the master device is changed). A determination result is reflected on the terminal information transmitted next time.

In Step S22, it is determined whether the own terminal is the master device. In a case where the own terminal is the master device (Step S22: Yes), the processing proceeds to Step S23. In a case where the own terminal is not the master device (Step S22: No), the processing proceeds to Step S26.

The processing in Step S23 to Step S25 is executed in the master device. In Step S23, a request for sensing data is given to the slave device. The master device transmits, to the slave device, a request for transmitting the sensing data to the master device (sensing data request). The sensing data request may be transmitted to all the slave devices connection with which to the master device is established.

In Step S24, it is determined whether there is the slave device outside the communication range. For example, as described above, in a case where nodes included in the terminal information from the slave device include nodeinfo of the slave device connection with which to the master device is not established, the master device determines that there is the slave device outside the communication range. In a case where there is the slave device outside the communication range (Step S24: Yes), the processing proceeds to Step S25. In a case where there is no slave device outside the communication range (Step S24: No), the processing proceeds to Step S31.

In Step S25, the slave device is requested to relay the sensing data. The master device transmits, to the slave device in the communication range, a command requesting relaying of the sensing data from the other slave device to the master device (relay request).

The processing in Step S26 to Step S30 are executed in the slave device. In Step S26, the request from the master device is received. The slave device receives the sensing data request or the relay request from the master device.

In Step S27, the processing branches according to the received request. In a case where the sensing data request is received, the processing proceeds to Step S30. In a case where the relay request is received, the processing proceeds to Step S28.

In Step S28, a request for sensing data is given to another slave device in the communication range. The slave device gives the request for the sensing data to another slave device connection of which with the own device is established. The other slave device transmits (returns) the sensing data to the slave device in response to the request. In Step S29, the slave device receives the sensing data from another slave device.

In Step S30, the sensing data is transmitted to the master device. The slave device transmits the previously requested sensing data to the master device.

The processing in Step S31 and Step S32 is executed in the master device. In Step S31, the sensing data from the slave device is received. The master device receives the sensing data from the slave device. In Step S32, the master device transmits the sensing data to the external network NW.

For example, in a case of the communication system 100A, the master device is determined from the plurality of terminals 5 in such a manner, and the determined master device collects the sensing data from the slave devices and transmits the sensing data to the external network NW.

### 6. Modification example

The disclosed technology is not limited to the above embodiments. Some modification examples will be described.

A sensing terminal 4 may also be provided outside a container 2. In this case, a terminal 5 outside the container 2 (second electric field communication terminal) receives sensing data from the sensing terminal 4 by M2M communication. As a node configuration in this case, a node configuration of the communication system 100 (FIG. 1) will be described as an example.

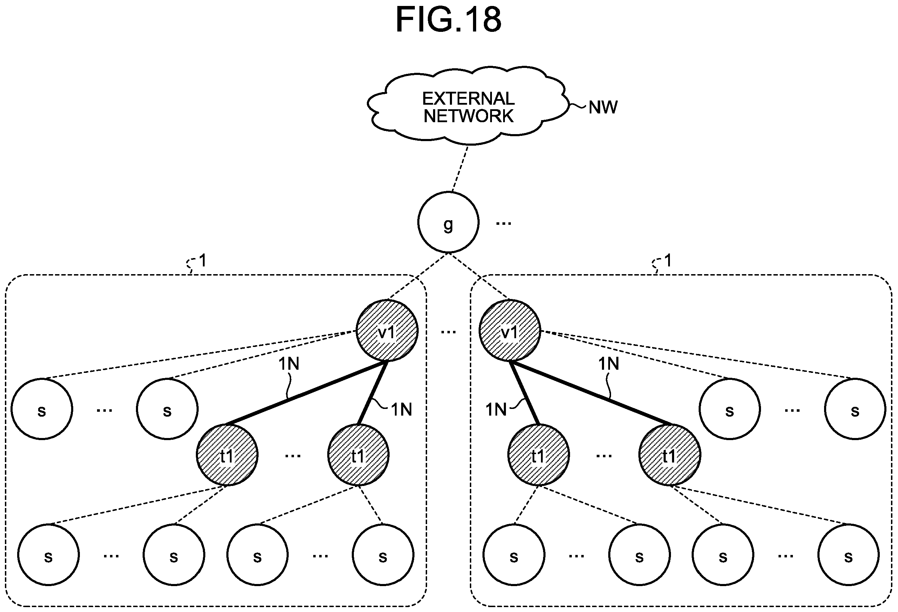

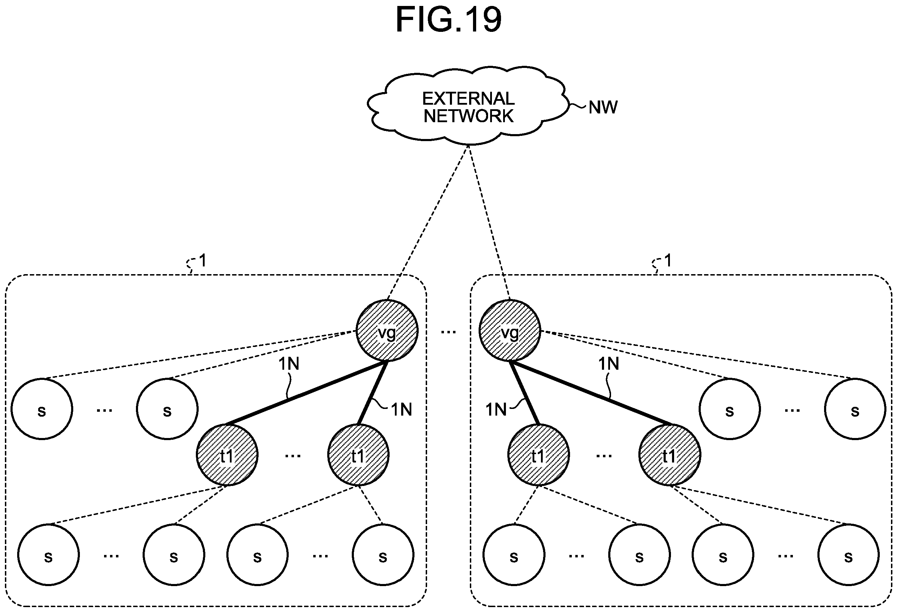

FIG. 18 and FIG. 19 are views illustrating examples of a node configuration of a communication system. In the node configuration illustrated as the example in FIG. 18, a node v1 also receives sensing data from a node s as compared with the node configuration in FIG. 7. Communication of the node v1 also includes M2M communication. A node configuration in a case where a node vg is used instead of the node v1 is as illustrated in FIG. 19. Communication of the node vg also includes the M2M communication.

In one embodiment, a terminal 5 may include only a device configuration corresponding to a required function (node). For example, when it is determined that the terminal 5 is attached to an inner side of a container 2 and it is known that LAN communication or external network communication is not performed, the terminal 5 may not include a LAN communication device 53 and an external NW communication device 54. Accordingly, the configuration of the terminal 5 can be simplified and a cost can be reduced.

In one embodiment, an application for utilizing a communication system 100 may be provided. The application may operate, for example, on a computer such as a smartphone, a tablet terminal, or a laptop that can access the external network NW from a place different from that of the communication system 100. The application may provide a user interface that receives selection of a cargo 3 to be a target of sensing data collection or the like (user operation), and presents (for example, displays) the collected sensing data.

### 7. Example of effects

The technology described above is specified as follows, for example. As described with reference to FIG. 1 to FIG. 4, FIG. 10, and the like, the communication system 100 (or the communication system 100A) includes the plurality of containers 2 and the plurality of terminals 5 (electric field communication terminals). The plurality of containers 2 has conductivity and is stacked. The plurality of terminals 5 is attached to the containers 2 in such a manner as to perform electric field coupling with any of the plurality of containers 2. The plurality of containers 2 includes the container 2 that contains the sensing terminal 4 that acquires the sensing data. The plurality of terminals 5 includes the terminal 5 attached to the inner side of the container 2 in which the sensing terminal 4 is contained (first electric field communication terminal) and the terminal 5 attached to the outer side of at least one container 2 of the plurality of containers 2 (second electric field communication terminal). The terminal 5 inside the container 2 transmits, via the plurality of containers 2, the sensing data from the sensing terminal 4 to the terminal 5 outside the container 2.

According to the communication system 100 and the like, sensing data can be taken out of the container 2. By using the electric field communication, communication between the inside of the container 2 and the outside of the container 2 can be made wireless. For example, it is not necessary to connect the inside and the outside of the container 2 having conductivity by wire (for example, by processing of a wall). The device configuration is simplified, and the terminal 5 can be easily installed (attached to the container 2, for example).

As described with reference to FIG. 7, FIG. 8, FIG. 12, FIG. 13, and the like, the terminal 5 may construct the electric field communication network 1N by establishing connection with the other terminals 5, and reconstruct the electric field communication network 1N according to a change in the connection. For example, the electric field communication network 1N may be reconstructed when the connection of some of the plurality of terminals 5 is no longer established. The electric field communication network 1N may be reconstructed when some containers 2 of the plurality of containers 2 are no longer included. For example, even in a case where the number or an installation state of the sensing terminals 4 and the terminals 5 changes, the sensing data can be taken out of the container 2.

As described with reference to FIG. 1, FIG. 7, FIG. 8, FIG. 10, FIG. 12, FIG. 13, and the like, the terminal 5 outside the container 2 may directly or indirectly transmit the sensing data from the terminal 5 inside the container 2 to the external network NW. As a result, for example, the sensing data can be collected via the external network NW. For example, the terminal 5 outside the container 2 may transmit the sensing data to the external network NW via the gateway device 6. In this case, the terminal 5 outside the container 2 can be used as a network bridge terminal. Not only taking the sensing data out of the container 2, but also securely transmitting the sensing data to the terminal 5 installed in a place connectable to the external network NW become possible.

As described with reference to FIG. 10 and the like, the plurality of terminals 5 may include a plurality of terminals 5 outside the container 2, the plurality of terminals 5 may determine one terminal 5 among the plurality of terminals 5 outside the container 2 as the master device and determine the other terminals 5 as the slave devices, and the master device may transmit the sensing data received by the slave devices from the sensing terminal 4 to the external network NW. As a result, for example, transmission of the sensing data to the external network NW can be made efficient.

The terminals 5 may reconstruct the electric field communication network 1N by changing the master device. As a result, for example, even in a case where the master device is separated from the electric field communication network 1N, transmission of sensing data to the external network NW can be maintained.

The plurality of terminals 5 may determine the master device on the basis of communication reliability from each of the terminals 5 to the external network NW. For example, by determining the terminal 5 having the highest communication reliability as the master device, it is possible to improve reliability of transmission of sensing data to the external network NW. For example, as described with reference to FIG. 11 and the like, even in a case where the communication status may vary among the plurality of terminals 5 outside the containers 2 located at different positions in the stacking direction of the plurality of containers 2, the sensing data can be transmitted to the external network NW by the appropriately determined master device.

The slave device may relay sensing data from another slave device to the master device. As a result, even in a case where there is a slave device that cannot directly perform electric field communication with the master device (outside the communication range), sensing data from the slave device can be transmitted to the master device.

As described with reference to FIG. 4 and the like, each of the terminals 5 may include the antenna 522 that is provided in such a manner as to face the container 2 and generates dielectric polarization in the dielectric D between the terminal 5 and the container 2. For example, such an antenna 522 can be used for electric field coupling with the container 2.

The communication method described with reference to FIG. 16 and the like is also one of the embodiments. The communication method includes transmitting, via the plurality of stacked containers 2 having conductivity, sensing data from the sensing terminal 4 to the terminal 5 attached to the outer side of at least one container 2 of the plurality of containers 2 in such a manner as to perform electric field coupling with the container 2 (second electric field communication terminal), the transmitting being performed by the terminal 5 attached to the inner side of the container 2, which contains the sensing terminal 4 that acquires the sensing data, among the plurality of containers 2 in such a manner as to perform electric field coupling with the container 2 (first electric field communication terminal) (for example, Step S13). Also by such a communication method, the sensing data can be taken out of the container 2 as described above.

Note that the effects described in the present disclosure are merely examples and are not limited to the disclosed contents. There may be other effects.

Although embodiments of the present disclosure have been described above, the technical scope of the present disclosure is not limited to the above-described embodiments as they are, and various modifications can be made within the spirit and scope of the present disclosure. In addition, components of different embodiments and modification examples may be arbitrarily combined.

Note that the present technology can also have the following configurations.
(1) A communication system comprising:
   a plurality of stacked containers having conductivity; and
   a plurality of electric field communication terminals attached to the containers in such a manner as to perform electric field coupling with any of the plurality of containers, wherein
   the plurality of containers includes a container that contains a sensing terminal that acquires sensing data,
   the plurality of electric field communication terminals includes
   a first electric field communication terminal attached to an inner side of the container in which the sensing terminal is contained, and
   a second electric field communication terminal attached to an outer side of at least one container of the plurality of containers, and
   the first electric field communication terminal transmits the sensing data from the sensing terminal to the second electric field communication terminal via the plurality of containers.
(2) The communication system according to (1), wherein
   the electric field communication terminals construct an electric field communication network by establishing connection with another electric field communication terminal, and reconstruct the electric field communication network according to a change in the connection.
(3) The communication system according to (1) or (2), wherein
   the electric field communication terminals construct an electric field communication network by establishing connection with another electric field communication terminal, and reconstruct the electric field communication network when the connection of some electric field communication terminals of the plurality of electric field communication terminals is no longer established.
(4) The communication system according to any one of (1) to (3), wherein
   the electric field communication terminals construct an electric field communication network by establishing connection with another electric field communication terminal, and reconstruct the electric field communication network when some containers of the plurality of containers are no longer included.
(5) The communication system according to any one of (1) to (4), wherein
   the second electric field communication terminal directly or indirectly transmits sensing data from the first electric field communication terminal to an external network.
(6) The communication system according to (5), wherein
   the second electric field communication terminal transmits the sensing data to the external network via a gateway device.
(7) The communication system according to any one of (1) to (6), wherein
   the plurality of electric field communication terminals includes a plurality of the second electric field communication terminals,
   the plurality of electric field communication terminals determines one electric field communication terminal among the plurality of second electric field communication terminals as a master device and determines the other electric field communication terminal as a slave device, and
   the master device transmits the sensing data received by the slave device from the sensing terminal to an external network.
(8) The communication system according to (7), wherein
   the electric field communication terminals construct an electric field communication network by establishing connection with another electric field communication terminal, and reconstruct the electric field communication network by a change of the master device.
(9) The communication system according to (7) or (8), wherein
   the plurality of electric field communication terminals determines the master device on a basis of communication reliability from each of the electric field communication terminals to the external network.
(10) The communication system according to any one of (7) to (9), wherein
   the plurality of second electric field communication terminals is located at different positions in a stacking direction of the plurality of containers.
(11) The communication system according to any one of (7) to (10), wherein
   the slave device relays sensing data from another slave device to the master device.
(12) The communication system according to any one of (1) to (11), wherein
   each of the electric field communication terminals includes an antenna that is provided in such a manner to face the containers and that generates dielectric polarization in a dielectric between the electric field communication terminal and the containers.
(13) A communication method comprising:
   transmitting, via a plurality of stacked containers having conductivity, sensing data from a sensing terminal to a second electric field communication terminal attached to an outer side of at least one container of the plurality of containers in such a manner as to perform electric field coupling with the container, the transmitting being performed by a first electric field communication terminal attached to an inner side of a container, which contains the sensing terminal that acquires the sensing data, among the plurality of containers in such a manner as to perform the electric field coupling with the container.

### Reference Signs List

1 CONTAINER STACK
2 CONTAINER
3 CARGO
4 SENSING TERMINAL
41 SENSOR
42 M2M COMMUNICATION DEVICE
43 CPU
44 STORAGE DEVICE
5 TERMINAL
51 M2M COMMUNICATION DEVICE
52 ELECTRIC FIELD COMMUNICATION TRANSCEIVER
521 SIGNAL PROCESSING UNIT
522 ANTENNA
53 LAN COMMUNICATION DEVICE
54 EXTERNAL NW COMMUNICATION DEVICE
55 CPU
56 STORAGE DEVICE
6 GATEWAY DEVICE
61 LAN COMMUNICATION DEVICE
62 EXTERNAL NW COMMUNICATION DEVICE
63 CPU
64 STORAGE DEVICE
7 CONTAINER SHIP
8 ARTIFICIAL SATELLITE
100 COMMUNICATION SYSTEM
1N ELECTRIC FIELD COMMUNICATION NETWORK
NW EXTERNAL NETWORK
D DIELECTRIC
g NODE
vg NODE
v1 NODE
v2 NODE
t1 NODE
t2 NODE

## Claims

1. A communication system comprising:
a plurality of stacked containers having conductivity; and
a plurality of electric field communication terminals attached to the containers in such a manner as to perform electric field coupling with any of the plurality of containers, wherein
the plurality of containers includes a container that contains a sensing terminal that acquires sensing data,
the plurality of electric field communication terminals includes
a first electric field communication terminal attached to an inner side of the container in which the sensing terminal is contained, and
a second electric field communication terminal attached to an outer side of at least one container of the plurality of containers, and
the first electric field communication terminal transmits the sensing data from the sensing terminal to the second electric field communication terminal via the plurality of containers.

2. The communication system according to claim 1, wherein
the electric field communication terminals construct an electric field communication network by establishing connection with another electric field communication terminal, and reconstruct the electric field communication network according to a change in the connection.

3. The communication system according to claim 1, wherein
the electric field communication terminals construct an electric field communication network by establishing connection with another electric field communication terminal, and reconstruct the electric field communication network when the connection of some electric field communication terminals of the plurality of electric field communication terminals is no longer established.

4. The communication system according to claim 1, wherein
the electric field communication terminals construct an electric field communication network by establishing connection with another electric field communication terminal, and reconstruct the electric field communication network when some containers of the plurality of containers are no longer included.

5. The communication system according to claim 1, wherein
the second electric field communication terminal directly or indirectly transmits sensing data from the first electric field communication terminal to an external network.

6. The communication system according to claim 5, wherein
the second electric field communication terminal transmits the sensing data to the external network via a gateway device.

7. The communication system according to claim 1, wherein
the plurality of electric field communication terminals includes a plurality of the second electric field communication terminals,
the plurality of electric field communication terminals determines one electric field communication terminal among the plurality of second electric field communication terminals as a master device and determines the other electric field communication terminal as a slave device, and
the master device transmits the sensing data received by the slave device from the sensing terminal to an external network.

8. The communication system according to claim 7, wherein
the electric field communication terminals construct an electric field communication network by establishing connection with another electric field communication terminal, and reconstruct the electric field communication network by a change of the master device.

9. The communication system according to claim 7, wherein
the plurality of electric field communication terminals determines the master device on a basis of communication reliability from each of the electric field communication terminals to the external network.

10. The communication system according to claim 7, wherein
the plurality of second electric field communication terminals is located at different positions in a stacking direction of the plurality of containers.

11. The communication system according to claim 7, wherein
the slave device relays sensing data from another slave device to the master device.

12. The communication system according to claim 1, wherein
each of the electric field communication terminals includes an antenna that is provided in such a manner to face the containers and that generates dielectric polarization in a dielectric between the electric field communication terminal and the containers.

13. A communication method comprising:
transmitting, via a plurality of stacked containers having conductivity, sensing data from a sensing terminal to a second electric field communication terminal attached to an outer side of at least one container of the plurality of containers in such a manner as to perform electric field coupling with the container, the transmitting being performed by a first electric field communication terminal attached to an inner side of a container, which contains the sensing terminal that acquires the sensing data, among the plurality of containers in such a manner as to perform the electric field coupling with the container.
